# EUROPÄISCHE PATENTANMELDUNG

(11) **EP 0 762 076 A2**
(43) Veröffentlichungstag der Anmeldung: **12.03.1997**
(21) Anmeldenummer: 96111340.4
(22) Anmeldetag: 13.07.1996
(51) Int. Cl.: G01B 5/28, G01B 11/30

(54) **Verfahren und Einrichtung zur Materialanalyse**

(30) Priorität: 04.09.1995 DE 19532547
(71) Anmelder: Innovatherm Prof. Dr. Leisenberg GmbH + Co. KG, D-35510 Butzbach (DE)
(72) Erfinder: Leisenberg, Wolfgang, Dr.-Ing. Prof., 61231 Bad Nauheim (DE); Ratzenberger, Hansgeorg, Dipl.-Chem., 99425 Weimar (DE)
(74) Vertreter: Engelhardt, Guido, Dipl.-Ing.

(57) **Zusammenfassung**

Bei einer Einrichtung zur Materialanalyse insbesondere zur Korngrößen- und/oder Konsistensbestimmung eines plastischen Gutes (1) ist eine ortsfest angeordnete Meßeinrichtung (11) vorgeseshen, gegenüber der das Gut (1) relativ bewegbar ist. Der Meßeinrichtung (11) ist ein Sensor (14) zugeordnet, mittels dem die Oberfläche (2) des Gutes (1) während der Relativbewegung mechanisch abtastbar ist und die Verstellbewegungen des Sensors meßbar sind.

Durch diese Ausgestaltung ist es möglich, kontinuierlich die Korngröße und/oder die Konsistenz des Gutes (1) zu bestimmen, so daß bei Abweichungen von vorgegebenen Werten sofort reagiert werden kann.

## Beschreibung

Die Erfindung bezieht sich auf ein Verfahren zur Materialanalyse, insbesondere zur Korngrößen- und/oder Konsistensbestimmung eines plastischen oder eines schüttfähigen Gutes, beispielsweise zur Materialanalyse von als Strang ausgeformter keramischer Masse, sowie eine Einrichtung zur Anwendung dieses Verfahrens.

Die Bestimmung der Rohstoffparameter eines Gutes wird derzeit nach Labormethoden vorgenommen, in dem z. B. durch Sieben des Materials der Anteil unterschiedlich groß bemessener Körner bestimmt wird. Diese Verfahrensweise ist äußerst arbeitsintensiv und zeitaufwendig und in einem Produktionsprozess nur stichprobenweise anwendbar, eine kontinuierliche Korrektur von Prozeßparametern, gestützt auf diese Art der Materialanalyse, ist demnach nicht realisierbar.

Aufgabe der Erfindung ist es daher, ein Verfahren sowie eine Einrichtung zur Materialanalyse eines plastischen oder eines schüttfähigen Gutes zu schaffen, mittels denen es möglich ist, kontinuierlich die Korngröße und/oder die Konsistenz des Gute zu bestimmen, so daß bei Abweichungen von den vorgegebenen Werten sofort reagiert werden kann. Der dazu erforderliche Bauaufwand soll gering gehalten werden, auch soll die Handhabung leicht zu bewerkstelligen sein, vor allem aber soll zuverlässig das Oberflächenprofil eines plastischen oder schüttfähigen Gutes, mittels dem auf dessen Korngrößen und/oder die Konsistenz zu schließen ist, erfaßt und ausgewertet werden können.

Gemäß der Erfindung ist das Verfahren zur Materialanalyse eines plastischen oder schüttfähigen Gutes dadurch gekennzeichnet, daß das Gut mit seiner Oberfläche relativ zu einer Meßeinrichtung in seiner Längsrichtung bewegt wird, und daß die Oberfläche des Gutes zur Ermittlung eines Oberflächenprofils während der Relativbewegung mit Hilfe eines oder mehrerer der Meßeinrichtung zugeordneter Sensoren mechanisch und/oder berührungslos abgetastet wird.

Das Gut sollte hierbei in seiner Längsrichtung relativ zu der Meßeinrichtung bewegt werden und zur Korngrößenanalyse sollten die hochfrequenten Anteile des an der Meßeinrichtung vorbeigewegten Oberflächenproflls erfaßt werden.

Zweckmäßig ist es, die Oberfläche des plastischen, vorzugsweise als Strang ausgeformten Gutes mit Hilfe eines Stiftes als Sensor abzutasten, der federnd aufgehängt ist, und die vertikalen Verstellbewegungen des in das Gut einsinkender massearm aufgehängten Stiftes bzw. das Relief mittels eines Weggebers, insbesondere eines mit dessen Spitze zusammenwirkenden Wirbelstromweggebers, zu erfassen.

Außerdem sollte die Referenzhöhe der Oberfläche des Gutes mit Hilfe eines z.B. sich auf diesem abstützenden vorzugsweise den Sensor tragenden Rades ermittelt werden, wobei mittels des z. B. mit einem Drehimpulsgeber versehenen Rades während der Verstellbewegung des Gutes ein wegabhängiges Signal abgegeben wird.

Nach einer andersartigen Verfahrensweise kann aber auch die Oberfläche des Gutes mit Hilfe eines Lichtstrahls, vorzugsweise einem Laser-Triangulationsweggeber, eines Druckluftstrahles oder eines Ultraschallstrahles als Sensor abgtastet werden.

Ferner ist es angezeigt, die Relativgeschwindigkeit des Gutes gegenüber der Meßeinrichtung während der Bewegung zwischen diesen mechanisch und/oder berührungslos zu messen. Dies kann mittels einer Geschwindigkeitsmessung nach dem Laser-Dopplerverfahren durch einen Drehweg- oder Drehgeschwindigkeitsgeber erfolgen.

Das Relief der Oberfläche des Gutes sollte des weiteren in Abhängigkeit von der von der Meßeinrichtung aufgenommenen Geschwindigkeit in ein Längenmaß umgewandelt werden, und die Profildaten der Oberfläche des Gutes sollten unterschiedlichen Filteralgorithen unterzogen werden, derart, daß Oberflächenwellen in Kornfraktionen getrennt und eine Verteilung der Reliefhöhen und/oder der Peakflächen berechnet werden.

Angebracht ist es auch, die Oberfläche des Gutes vor dem Abtasten aufzurauhen und/oder zu erodieren. Dies kann durch einen Druckluft-, Dampf-, Oel- oder Wasserstrahl bzw. insbesondere bei einem strangförmig ausgebildeten Gut mittels eines Kratzfingers geschehen. Bei einem als Preßstrang ausgebildeten Gut sollte vor dem berührungslosen Abtasten der Oberfläche die Preßhaut durch ein Abschälmesser, einen Schneidedraht oder dgl. entfernt werden.

Bei Verwendung eines Druckluftstrahles als Sensor sollte die Oberfläche des Gutes vor dem mit Wasser befeuchtet und anschließend durch den Druckluftstrahl aufgerauht oder erodiert werden sollte.

Zur Konsistenzbestimmung eines plastischen Gutes ist es angebracht, dessen Oberfläche mit Hilfe eines Druckluftstrahles zu verformen und nach dem Düse-Prallplatte-Prinzip oder mittels eines nach dem Echlolot-Prinzip arbeitenden Ultraschallabstandsensors abzutasten.

Bei einem schüttfähigen Gut sollte dessen Oberfläche vor dem Abtasten durch einen Abstreifer geglättet bzw. auf ein definierten Höhenniveau gebracht werden.

Ferner ist vorgesehen, den Anpreßdruck des Stiftes bzw. den Druck des Druckluftstrahles auf die Oberfläche des Gutes bei Verwendung eines plastisch verformbaren Werkstoffes in periodischen Zeitabständen zu verändern und die Absenkungsdifferenz der Oberfläche als Maß für die Konsistenz des Werkstoffes zu verwenden, wobei zur Ermittlung der Konsistenz des Werkstoffes die mittlere Tiefe und/oder die Fläche der Absenkung verwertet werden kann. Dabei kann der Stift bzw. der Luftstrahl mit zwei unterschiedlichen Kräften auf die Oberfläche des Gutes einwirken. Auch sollte bei Einwirkung eines Druckluftstrahles als Sensor der Meßeinrichtung auf die Oberfläche eines plastisch verformbaren Gutes wechselweise eine Messung der Konsistenz ohne Wasser und eine Korngrößenanalyse mit vorheriger Befeuchtung vorgenommen werden.

Die Einrichtung zur Materialanalyse eines plastischen oder eines schüttfähigen Gutes ist gekennzeichnet durch eine vorzugsweise ortsfest angeordnete Meßeinrichtung, gegenüber der das Gut relativ bewegbar ist, und einem oder mehreren der Meßeinrichtung zugeordneten Sensoren, mittels denen die Oberfläche des Gutes während der Relativbewegung mechanisch und/oder berührungslos abtastbar ist und deren vertikale Verstellbewegungen bzw. Reflektionen meßbar sind.

Die Höhen- und Frequenzauflösung des Sensors sollte hierbei im Bereich der Dimensionen der kleinsten aufzulösenden Korngrößen liegen.

Der Sensor der Meßeinrichtung kann hierbei durch einen auf der Oberfläche eines strangförmigen Gutes vorzugsweise mit einstellbarer Kraft aufliegenden höhenverstellbar gehaltenen und in Bewegungsrichtung des Gutes geführten massearmen Stift gebildet werden, der an einer vorzugsweise etwa parallel zu dem strangförmigen Gut angeordneten Blattfeder gehalten ist und in Verstellrichtung des Gutes geneigt, vorzugsweise unter einem Winkel von 30 bis 60°, zu diesem an der Blattfeder befestigt sein sollte. Der Stift sollte einen Durchmesser aufweisen, der in der Größenrodnung des mittleren Korngrößenspektrums liegt.

Zur Ermittlung der vertikalen Verstellbewegung des Stiftes kann diesem ein Weggeber, vorzugsweise ein Wirbelstromweggeber, zugeordnet werden, auch sollte die Meßeinrichtung mit einem Referenzglied z. B. in Form eines auf dem strangförmigen Gut sich abstützenden drehbar gelagerten Rades versehen sein, an dem der Sensor aufgehängt ist, wobei zur Bildung eines in Abhängigkeit von dem Verstellweg des Gutes erzeugbaren Signals das Rad mit einem Drehimpuls- oder Drehgeschwindigkeitsgeber versehen sein sollte.

Nach andersartigen Ausgestaltungen kann der Sensor der Meßeinrichtung durch einen Lichtstrahl, vorzugsweise einen Lasertriangulationswegaufnehmer, einen Druckluftstrahl oder einen Ultraschallstrahl gebildet sein. Bei einem Laser-Lichtstrahl als Sensor sollte dessen Durchmesser in der Größenordnung des mittleren Korngrößenspektrums liegen.

Zur Erfassung der Relativgeschwindigkeit des Gutes gegenüber der Meßeinrichtung kann des weiteren ein vorzugsweise nach dem Laserdopplerverfahren wirksamer oder als Drehwinkelgeber ausgebildeter Sensor vorgesehen werden.

Zur Aufrauhung und/oder Erodierung der Oberfläche eines strangförmigen Gutes vor dem berührungslosen Abtasten ist es angebracht, einen auf die Oberfläche einwirkenden Druckluft-, Dampf-, Oel- oder Wasserstrahl und/oder einen Kratzfinger vorzusehen oder die Preßhaut eines als Preßstrang ausgebildeten Gutes mittels eines Abschälmesser, einem Schneidedraht oder dgl. zu entfernen.

Bei einem schüttfähigen Gut sollte vor der Meßeinrichtung ein Abstreifer angeordnet werden.

Mit Hilfe des erfindungsgemäßen Verfahrens bzw. der vorschlagsgemäß ausgebildeten Einrichtung ist es auf einfache und wirtschaftliche Weise möglich, kontinuierlich die Korngrößen und/oder die Konsistenz eines plastischen oder schüttfähigen Gutes, insbesondere als Strang ausgeformter keramischer Massen, ohne Schwierigkeiten zu bestimmen. Dazu ist lediglich mittels einer in entsprechender Weise ausgebildeten Meßeinrichtung die Oberfläche des Gutes mechanisch und/oder berührungslos abzutasten, um mit Hilfe weiterer leicht ermittelbarer Meßdaten ein Höhenprofil der Oberfläche des Gutes zu erhalten, das Rückschlüsse auf die Steifigkeit des überwachten Gutes und/oder den Anteil der jeweiligen unterschiedlich groß bemessenen Körner erlaubt. Bei Abweichungen von vorgegebenen Daten kann somit sofort in einen Produktionsprozeß eingegriffen werden. Der Bauaufwand, um das erfindungsgemäße Verfahren einsetzen zu können, ist äußerst gering, auch ist dieses ohne Schwierigkeiten in sehr vielseitiger Weise anzuwenden.

In der Zeichnung sind drei Ausführungsbeispiele einer Einrichtung zur Materialanalyse eines plastischen Gutes dargestellt, die nachfolgend im einzelnen erläutert sind. Hierbei zeigen, jeweils in schematischer Darstellung:
- Figur 1: eine mit einem Stift als Sensor versehene Einrichtung zur Bestimmung der Konsistenz eines Tonstranges,
- Figur 2: eine mit einem Lichtstrahl als Sensor arbeitende Einrichtung zur Bestimmung der Konsistenz und/oder Korngrößenverteilung des Tonstranges,
und
- Figur 3: eine mit einem Druckluft- und Wasserstrahl zur Erosion arbeitende Einrichtung, die der Einrichtung nach Figur 2 vorgeschaltet ist.

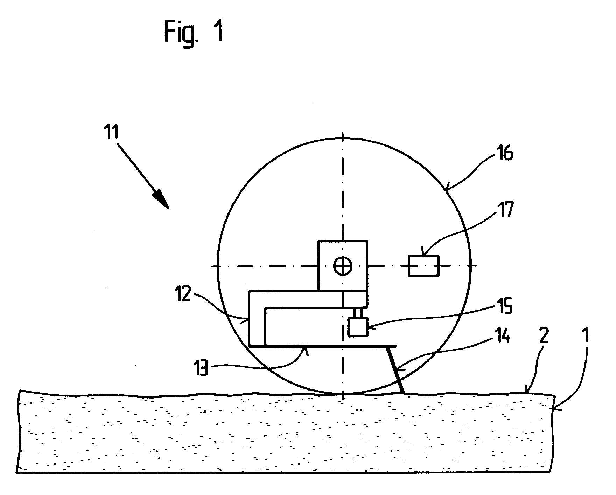

Die in Figur 1 dargestellte und mit 11 bezeichnete ortsfest angeordnete Meßeinrichtung dient zur Bestimmung der Konsistenz und/oder Korngrößenverteilung eines an dieser in seiner Längrichtung vorbei bewegten Tonstranges 1 und besteht im wesentlichen aus einem mittels einer Blattfeder 13 an einem Halter 12 massearm aufgehängten Stift 14 als Sensor, dem zur Ermittlung der vertikalen Verstellbewegungen ein ebenfalls an dem Halter 12 angebrachter berührungslos arbeitender Weggeber 15 zugeordnet ist. Außerdem ist die Meßeinrichtung 11 mit einem auf der Oberfläche 2 des Tonstranges 1 sich abstützenden und somit mitlaufenden Rades 16 versehen, mittels dem die Referenzhöhe der Oberfläche 2 bestimmbar ist. Das Rad 16, das zusammen mit dem Halter 12 und somit auch mit dem Stift 14 höhenverstellbar ist, ist mit einem Drehimpulsgeber 17 ausgestattet, so daß während der Verstellbewegungen des Stranges 1 ein wegabhängiges Signal erzeugbar ist.

Die von dem durch den dünnen nahezu masselosen Stift 14, der in Bewegungsrichtung des Tonstranges 1 starr geführt ist, als Sensor beeinflußten Weggeber 15 sowie dem Drehimpulsgeber 17 des Rades 16 abgegebenen Signale werden als Profildaten der mechanisch abgetasteten Oberfläche 2 des Tonstranges 1 unterschiedlichen Filteralogarithmen unterzogen, derart, daß Oberflächenwellen in Kornfraktionen getrennt und die Verteilung der Reliefhöhen und/oder der Peakflächen berechnet werden können. Von den Ergebnissen dieser Auswertung kann auf die Korngrößenverteilung in dem Tonstrang 1 geschlossen werden. Wird der Halter 12 beweglich ausgebildet und z.B. durch einen Exzenter auf der Radachse auf- und abbewegt, dann wird damit die Kraft auf den Stift 14 periodisch verändert und aus der unterschiedlichen Einsinktiefe kann ferner auf die Konstistenz geschlosssen werden.

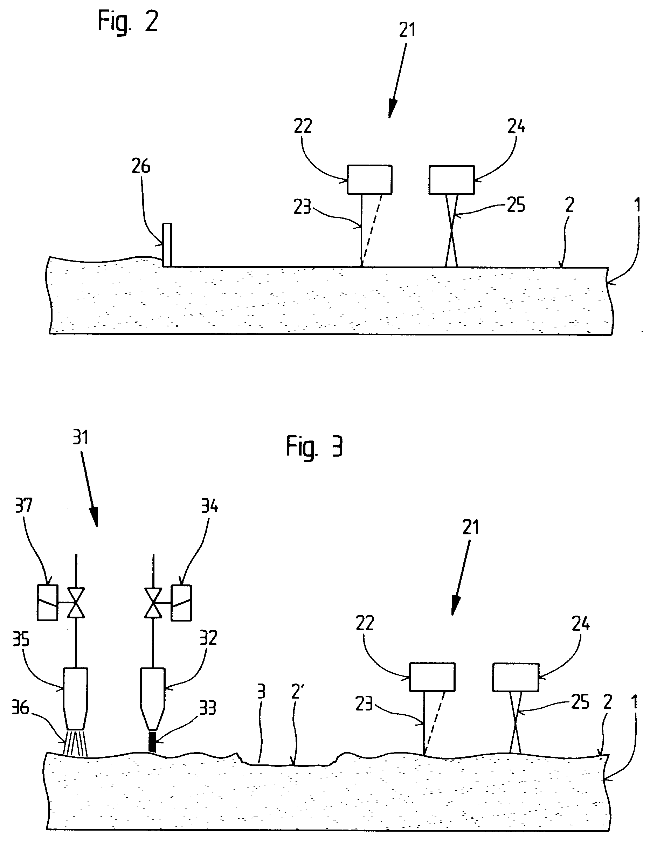

Mittels der Meßeinrichtung 21 nach Figur 2 ist auf die Größe der in dem Tonstrang 1 eingeschlossenen Körner zu schließen. Um dies zu bewerkstelligen, wird die Oberfläche 2 des Tonstranges 1 durch einen Lichtstrahl 23 als Sensor und somit berührungslos abgetastet. Der Lichtstrahl 23 wird von einem Gerät 22 abgegeben und von diesem werden auch die Reflektionen erfaßt. Der Durchmesser des Lichtstrahles 23 sollte hierbei in der Größenordnung des aufzulösenden Korndurchmessers, der erfaßt werden soll, liegen. Des weiteren wird hierbei die Geschwindigkeit des Stranges 1 mit Hilfe eines Geschwindigkeitsmeßgerätes 24, das nach dem Laser-Dopplerverfahren arbeitet und einen Lichtstrahl 25 aussendet und reflektiert, gemessen. Anhand der von den Geräten 22 und 24 aufgenommenen Signale kann die Größe der in dem Tonstrang 1 befindlichen Körner ermittelt werden.

Mittels eines vor der Meßeinrichtung 21 angeordneten Kratzfingers 26 wird die Oberfläche 2 des Tonstranges 1, um zuverlässige Meßergebnisse zu erhalten, aufgerauht und erodiert.

Bei der in Figur 3 gezeigten Ausführungsvariante ist der Meßeinrichtung 21 eine Einrichtung 31 vorgeschaltet, mittels der einerseits in die Oberfläche 2 des Tonstranges 1 eine Absenkung 3 eingearbeitet werden kann, um eine abweichende Profilhöhe zu erhalten, andererseits ist ein berührungsloses Abtasten der Oberfläche 2 mittels eines Druckluftstrahles 33 als Sensor, der aus einer Düse 32 austritt, möglich. Bei einer reinen Konsistenzmessung wäre somit die Meßeinrichtung 21 nicht erforderlich. Die Düse 32 wird mittels eines Magnetventils 34 gesteuert, eine periodische Beaufschlagung der Oberfläche 2 ist demnach ohne weiteres zu bewerkstelligen.

Der Düse 32 vorgeschaltet ist eine ebenfalls mittels eines Magnetventils 37 steuerbare Spraydüse 35, aus der zum Befeuchten der Oberfläche 2 des Tonstranges 3 ein Wasserstrahl 36 ausgestoßen werden kann.

Mit Hilfe des Druckluftstrahles 33 als Sensor, der als Druckluftimpuls konstanter Dauer im Bereich einiger Zehntel Sekunden auf die Oberfläche 2 einwirkt, kann die Konsistenz des Tonstranges 1 erfaßt werden. Der Druckluftstrahl 33 erzeugt dabei eine Vertiefung, die zusammen mit dem Abstand zur Düse 32 ohne Beaufschlagung ausgewertet wird.

Bei der Meßeinrichtung 31 ist es des weiteren möglich, im Wechsel eine Messung der Plastizität des Tonstranges 1 ohne Wasser und eine Korngrößenanalyse mit Wasser vorzunehmen. Dabei wird die Sprühdüse 35 mittels des Magnetventils 37 in abgestimmter Zeitfolge mit der den Druckluftstrahl 33 abgebenden Düse 32 betätigt.

## Patentansprüche

1. Verfahren zur Materialanalyse, insbesondere zur Korngrößen- und/oder Konsistenzbestimmung eines plastischen oder eines schüttfähigen Gutes beispielsweise zur Materialanalyse von als Strang ausgeformter keramischer Massen,
**dadurch gekennzeichnet,**
daß das Gut (1) mit seiner Oberfläche (2) relativ zu einer vorzugsweise ortsfest angeordneten Meßeinrichtung (11; 21; 31) bewegt wird und daß die Oberfläche (2) des Gutes (1) zur Ermittlung eines Oberflächenprofils während der Relativbewegung mit Hilfe eines oder mehrerer der Meßeinrichtung (11; 21; 31) zugeordneter Sensoren (14; 22; 33) mechanisch und/oder berührungslos abgetastet wird.

2. Verfahren nach Anspruch 1,
**dadurch gekennzeichnet,**
daß das Gut (1) in seiner Längsrichtung relativ zu der Meßeinrichtung (11; 21; 31) bewegt wird.

3. Verfahren nach Anspruch 1 oder 2,
**dadurch gekennzeichnet,**
daß zur Korngrößenanalyse die hochfrequenten Anteile des an der Meßeinrichtung (11; 21; 31) vorbeibewegten Oberflächenprofils des Gutes (1) erfaßt werden.

4. Verfahren nach einem oder mehreren
der Ansprüche 1 bis 3,
**dadurch gekennzeichnet,**
daß die Oberfläche (2) des plastischen, vorzugsweise als Strang ausformten Gutes (1) mit Hilfe eines Stiftes (14) als Sensor abgetastet wird, der federnd aufgehängt ist, und daß die vertikalen Verstellbewegungen des in das Gut (1) einsinkenden, massearm aufgehängten Stiftes (14) mittels eines Weggebers (15), insbesondere eines mit dessen Spitze zusammenwirkenden Wirbelstromweggebers, erfaßt werden.

5. Verfahren nach einem oder mehreren
der Ansprüche 1 bis 4,
**dadurch gekennzeichnet,**
daß die Referenzhöhe der Oberfläche (2) des Gutes (1) mit Hilfe eines z.B. als sich auf diesem abstützenden vorzugsweise den Sensor tragenden Rades (16) ermittelt wird.

6. Verfahren nach Anspruch 5,
**dadurch gekennzeichnet,**
daß mittels des z.B. mit einem Drehimpulsgeber (17) versehenen Rades (16) während der Verstellbewegung des Gutes (1) ein wegabhängiges Signal abgegeben wird.

7. Verfahren nach einem oder mehreren
der Ansprüche 1 bis 3,
**dadurch gekennzeichnet**
daß die Oberfläche (2) des Gutes (1) mit Hilfe eines Lichtstrahls (23), vorzugsweise einem Laser-Triangulationsweggeber, eines Druckluftstrahles (53) oder eines Ultraschallstrahles als Sensor, abgetastet wird.

8. Verfahren nach einem oder mehreren
der Ansprüche 1 bis 7,
**dadurch gekennzeichnet,**
daß die Relativgeschwindigkeit des Gutes (1) gegenüber der Meßeinrichtung (11; 21; 31) während der Bewegung zwischen diesen mechanisch und/oder berührungslos gemessen wird.

9. Verfahren nach Anspruch 8,
**dadurch gekennzeichnet,**
daß die Relativgeschwindigkeit des Gutes (1) gegenüber der Meßeinrichtung (21) mittels einer Geschwindigkeitsmessung nach dem Laser-Dopplerverfahren durch einen Drehweg- oder Drehgeschwindigkeitsgeber (24, 25) erfaßt wird.

10. Verfahren nach Anspruch 8 oder 9,
**dadurch gekennzeichnet,**
daß das Relief der Oberfläche des Gutes (1) in Abhängigkeit von der von der Meßeinrichtung (11; 21; 31) aufgenommenen Geschwindigkeit in ein Längenmaß umgewandelt wird.

11. Verfahren nach einem oder mehreren
der Ansprüche 1 bis 10,
**dadurch gekennzeichnet,**
daß die Profildaten der Oberfläche (2) des Gutes (1) unterschiedlichen Filteralgorithen unterzogen werden, derart, daß Oberflächenwellen in Kornfraktionen getrennt und eine Verteilung der Reliefhöhen und/oder der Peakflächen berechnet werden.

12. Verfahren nach einem oder mehreren
der Ansprüche 1 bis 11,
**dadurch gekennzeichnet,**
daß die Oberfläche (2) des Gutes (1) vor dem Abtasten aufgerauht und/oder erodiert wird.

13. Verfahren nach Anspruch 12,
**dadurch gekennzeichnet,**
daß die Oberfläche (2) des Gutes (1) vor dem Abtasten durch einen Druckluft-, Dampf-, Oel- oder Wasserstrahl bzw. insbesondere bei einem strangförmig ausgeformten Gut (1) mittels eines Kratzfingers (18) aufgerauht oder erodiert wird.

14. Verfahren nach Anspruch 12 oder 13,
**dadurch gekennzeichnet,**
daß bei einem als Preßstrang ausgebildeten Gut (1) vor dem berührungslosen Abtasten der Oberfläche (2) die Preßhaut durch ein Abschälmesser, einen Schneidedraht oder dgl. entfernt wird.

15. Verfahren nach einem oder mehreren
der Ansprüche 12 bis 14,
**dadurch gekennzeichnet,**
daß bei Verwendung eines Druckluftstrahles (33) als Sensor die Oberfläche (2) des Gutes (1) vor dem Abtasten mit Wasser befeuchtet und anschließend durch den Druckluftstrahl (33) aufgerauht oder erodiert wird.

16. Verfahren nach einem oder mehreren
der Ansprüche 12 bis 15,
**dadurch gekennzeichnet,**
daß zur Konsistenzbestimmung eines plastischen Gutes (1) dessen Oberfläche (2) mit Hilfe eines Druckluftstrahles verformt und nach dem Düse-Prallplatte-Prinzip oder mittels eines nach dem Echolot-Prinzip arbeitenden Ultraschall-Abstandsensors abgetastet wird.

17. Verfahren nach einem oder mehreren
der Ansprüche 1 bis 11,
**gekennzeichnet durch**
daß bei einem schuttfähigen Gut dessen Oberfläche vor dem Abtasten durch einen Abstreifer geglättet und/oder auf ein definiertes Höhenniveau gebracht wird.

18. Verfahren nach einem oder mehreren
der Ansprüche 1 bis 17,
**dadurch gekennzeichnet,**
daß der Anpreßdruck des Stiftes (14) bzw. der Druck des Druckluftstrahles (33) auf die Oberfläche (2) des Gutes (1) bei Verwendung eines plastisch verformbaren Werkstoffes in periodischen Zeitabständen verändert und die Absenkungsdifferenz der Oberfläche (2) als Maß für die Konsistenz des Werkstoffes verwendet wird.

19. Verfahren nach Anspruch 18,
**dadurch gekennzeichnet,**
daß zur Ermittlung der Konsistenz des Werkstoffes die mittlere Tiefe und/oder die Fläche der Absenkung verwertet werden.

20. Verfahren nach Anspruch 18 oder 19,
**dadurch gekennzeichnet,**
daß zur Ermittlung der Konsistenz des Werkstoffes der Stift (14) bzw. der Luftstrahl (33) mit zwei unterschiedlichen Kräften auf die Oberfläche (2) des Gutes (1) einwirkt.

21. Verfahren nach einem oder mehreren
der Ansprüche 1 bis 20,
**dadurch gekennzeichnet,**
daß bei Einwirkung eines Druckluftstrahles (33) als Sensor der Meßeinrichtung (31) auf die Oberfläche (2) eines plastisch verformbaren Gutes (1) wechselweise eine Messung der Konsistenz ohne Wasser und eine Korngrößenanalyse mit vorheriger Befeuchtung vorgenommen wird.

22. Einrichtung zur Materialanalyse, insbesondere zur Korngrößen- und/oder Konsistenzbestimmung eines plastischen oder eines schüttfähigen Gutes, beispielsweise zur Materialanalyse von als Strang ausgebildeter keramischer Massen, zur Anwendung des Verfahrens nach den Ansprüche 1 bis 21,
**gekennzeichnet durch**
eine vorzugsweise ortsfest angeordnete Meßeinrichtung (11; 21; 31), gegenüber der das Gut (1) relativ bewegbar ist, und einem oder mehreren der Meßeinrichtung (11; 21; 31) zugeordneten Sensoren (14; 23; 33), mittels denen die Oberfläche (2) des Gutes (1) während der Relativbewegung mechanisch und/oder berührungslos abtastbar ist und deren vertikale Verstellbewegungen bzw. Reflektionen meßbar sind.

23. Einrichtung nach Anspruch 22,
**dadurch gekennzeichnet,**
daß die Höhen- und Frequenzauflösung des Sensors (14; 23; 33) im Bereich der Dimensionen der kleinsten aufzulösenden Korngrößen liegt.

24. Einrichtung nach Anspruch 22 oder 23,
**dadurch gekennzeichnet,**
daß der Sensor der Meßeinrichtung (11) durch einen auf der Oberfläche (2) eines strangförmigen Gutes (1) vorzugsweise mit einstellbarer Kraft aufliegenden höhenverstellbar gehaltenen und in Bewegungsrichtung des Gutes (1) geführten massearmen Stift (14) gebildet ist.

25. Einrichtung nach Anspruch 24,
**dadurch gekennzeichnet,**
daß der Stift (14) an einer vorzugsweise etwa parallel zu dem strangförmigen Gut (1) angeordneten Blattfeder (12) gehalten ist.

26. Einrichtung nach Anspruch 24 oder 25,
**dadurch gekennzeichnet,**
daß der Stift (14) in Verstellrichtung des Gutes (1) geneigt, vorzugsweise unter einem Winkel von 30 bis 60° , zu diesem an der Blattfeder (12) befestigt ist.

27. Einrichtung nach einem oder mehreren
der Ansprüche 24 bis 26,
**dadurch gekennzeichnet,**
daß der Stift (14) einen Durchmesser aufweist, der in der Größenordnung des mittleren Korngrößenspektrums liegt.

28. Einrichtung nach einem oder mehreren
der Ansprüche 24 bis 27,
**dadurch gekennzeichnet,**
daß zur Ermittlung der vertikalen Verstellbewegung des Stiftes (14) diesem ein Weggeber (15), vorzugsweise ein Wirbelstromweggeber, zugeordnet ist.

29. Einrichtung nach einem oder mehreren
der Ansprüche 22 bis 28,
**dadurch gekennzeichnet,**
daß die Meßeinrichtung (11) mit einem Referenzglied z.B. in Form eines auf dem strangförmigen Gut (1) sich abstützenden drehbar gelagerten Rades (16) versehen ist, an dem der Sensor (14) aufgehängt ist.

30. Einrichtung nach Anspruch 29,
**dadurch gekennzeichnet,**
daß zur Bildung eines in Abhängigkeit von dem Verstellweg des Gutes (1) erzeugbaren Signals das Rad (16) mit einem Drehimpuls- oder Drehgeschwindigkeitsgeber (17) versehen ist.

31. Einrichtung nach Anspruch 22 oder 23,
**dadurch gekennzeichnet,**
daß der Sensor der Meßeinrichtung (21; 31) durch einen Lichtstrahl (23), vorzugsweise einen Lasertriangulationswegaufnehmer, einen Druckluftstrahl (33) oder einen Ultraschallstrahl gebildet ist.

32. Einrichtung nach Anspruch 31,
**dadurch gekennzeichnet,**
daß bei einem Laser-Lichtstrahl (23) als Sensor dessen Durchmesser in der Größenordnung des mittleren Korngrößenspektrums liegt.

33. Einrichtung nach einem oder mehreren
der Ansprüche 22 bis 32,
**dadurch gekennzeichnet,**
daß zur Erfassung der Relativgeschwindigkeit des Gutes (1) gegenüber der Meßeinrichtung (21) ein vorzugsweise nach dem Laserdopplerverfahren wirksamer oder als Drehwinkelgeber ausgebildeter Sensoren (24, 25) vorgesehen ist.

34. Einrichtung nach einem oder mehreren
der Ansprüche 22 bis 33,
**dadurch gekennzeichnet,**
daß zur Aufrauhung und/oder Erodierung der Oberfläche (2) eines strangförmigen Gutes (1) vor dem Abtasten ein auf die Oberfläche (2) einwirkender Druckluft-, Dampf-, Oel- oder Wasserstrahl und/oder ein Kratzfinger (26) vorgesehen sind.

35. Einrichtung nach einem oder mehreren
der Ansprüche 22 bis 34,
**dadurch gekennzeichnet,**
daß die Preßhaut eines als Preßstrang ausgebildeten Gutes (1) mittels eines Abschälmessers, einem Schneidedraht oder dgl. entfernbar ist.

36. Einrichtung nach einem oder mehreren
der Ansprüche 22 bis 34
**dadurch gekennzeichnet,**
daß bei einem schüttfähigen Gut vor der Meßeinrichtung ein Abstreifer angeordnet ist.
